# EUROPÄISCHE PATENTANMELDUNG

(11) **EP 1 734 010 A1**
(43) Veröffentlichungstag der Anmeldung: **20.12.2006**
(21) Anmeldenummer: 06012001.1
(22) Anmeldetag: 10.06.2006
(51) Int. Cl.: C02F 3/06, C02F 3/10

(54) **Festbettreaktor zur anaeroben Behandlung von Abwasser**

(30) Priorität: 17.06.2005 DE 102005028433
(71) Anmelder: ENVIRO-CHEMIE GmbH, 64380 Rossdorf (DE)
(72) Erfinder: Rey, Felix, 8852 Allendorf (CH); Hupfer, Gottlieb, 64846 Gross-Zimmerm (DE); Engelhart, Markus, Dr., 64283 Darmstadt (DE)
(74) Vertreter: Behrens, Helmut

(57) **Zusammenfassung**

Die Erfindung betrifft einen Festbettreaktor zur anaeroben Behandlung von Abwasser, der einen geschlossenen Behälterraum(2) mit einem Zulauf im Bereich des Behälterbodens und einen Ablauf im Bereich des Behälterkopfes sowie im Behälterraum (2) angeordnete Festbetteinbauten umfasst, wobei die Festbetteinbauten in vertikaler Richtung von dem zu behandelnden Abwasser durchströmt werden. Mit dem Festbettreaktor soll eine hohe Funktionalität, ein störungsfreier Betrieb sowie ein geringer Bedienungs- und Wartungsaufwand gewährleistet werden. Dies wird dadurch erreicht, dass die Festbetteinbauten (7) zumindest in einem Teilbereich der Gesamtlänge des Behälterraumes (2) angeordnet sind und ein vertikal ausgerichtetes Rohrbündelfestbett (7) umfassen, wobei das Rohrbündelfestbett (7) die gesamte Reaktorfläche im Querschnitt belegt und wobei das Rohrbündelfestbett (7) aus einer Vielzahl ausschließlich nebeneinander angeordneter Einzelröhren (8) besteht.

## Beschreibung

Biologische Verfahren zur Abwasseraufbereitung haben zum Ziel organische aber auch anorganische Stoffe durch Stoffwechseltätigkeit von Mikroorganismen abzubauen und aus dem Abwasser zu eliminieren.

Hierbei könne je nach Anwendungsgebiet unterschiedliche Reaktortypen und Prozesse eingesetzt werden. Ein bekannter Reaktortyp ist der Festbett-Bioreaktor, der sowohl in der kommunalen als auch industriellen Abwasser- und Abfallbehandlung angewendet wird.

Um hierbei die für den biologischen Prozess notwendige Biomasse im Reaktor aufwachsen zu lassen, werden bei dem Festbett-Bioreaktor im eigentlichen Behälterraum Aufwuchsflächen bereitgestellt, auf denen sich ein so genannter Biofilm bilden kann. Das zu behandelnde Abwasser wird dabei dem Behälterraum zugeführt und durchströmt die Aufwuchsflächen. Diese Aufwuchsflächen können aus anorganischen und/oder organischen Materialien mit regelmäßigen oder unregelmäßigen Strukturen bestehen. Es können auch Schüttungen von Aufwuchskörpern Verwendung finden. Die Festbetteinbauten sind in der Regel so beschaffen, dass sich die Biomasse daran gut festsetzen kann. Ein Beispiel derartiger Festbetteinbauten ist aus dem "Handbuch der anaeroben Behandlung von Abwasser", Autoren: Prof. Dr.-Ing. Dr.h.c. Dr.E.h. Botho Böhnke, Prof.Dr.-Ing. Wolfgang Bischofsberger, Prof.D.-Ing. Carl Franz Seyfried, Springer Verlag, 1993, Seite 154 ersichtlich.

Neben der Anordnung konzentrisch ineinander angeordneter Rohre sowie flexibler Wellplatten die kreisförmig ineinander gesteckt angeordnet sind, ist auch eine Anordnung von parallel beabstandeten Stanzprofilen bekannt, die eine Vielzahl rechteckig schräg gestellter Flächen, d.h. quer zur Strömungsrichtung des Abwassers, aufweisen. Bei Schüttungen von Aufwuchskörpern ergeben sich diese quer zur Strömungsrichtung ausgerichteten Flächen wahllos aufgrund der unregelmäßigen Anordnung der Körper in der Schüttung. In solchen Fällen kann ein beträchtlicher Teil der Biomasse suspendiert im Behälter vorliegen und wird nur physikalisch in den Zwischenräumen der Aufwuchskörper festgehalten, ohne als Biofilm eine Verbindung mit ihnen einzugehen.

Durch die Aktivität der Biomasse im Reinigungsprozess und die Umsetzung der Schmutzstoffe ergibt sich das so genannte Schlamm- oder Biofilmwachstum. Durch Vermehrung der Mikroorganismen, durch Einbindung feiner und feinster Schwebstoffe und durch Ausfällungen anorganischer Bestandteile nimmt die im Reaktor zurückgehaltene Feststoffmasse im Prozess kontinuierlich zu. Bei den zuvor beschriebenen bekannten Festbetteinbauten kann es in Abhängigkeit der Gestaltung zu partieller oder vollständiger Verblockung der freien Zwischenräume kommen. Somit werden nur noch bestimmte Reaktorbereiche durchströmt ("Channeling"), während andere Reaktorbereiche nicht mehr mit Abwasser beschickt werden ("Toträume"). Dadurch kommt es zu einer Abnahme der Abbauleistung des Festbettreaktors bis hin zu völligem Versagen der Reaktorfunktion. Häufig ist die Entfernung der Aufwuchskörper, die externe Reinigung und der Wiedereinbau bzw. der Austausch des Festbettes die einzige Möglichkeit zur Wiederherstellung der Reaktorfunktionalität.

Aufgabe der vorliegenden Erfindung ist es eine Vorrichtung sowie ein Verfahren zur anaeroben Behandlung von Abwasser mittels eines Festbettreaktors bereitzustellen, bei dem eine Vermeidung der vorgenannten Probleme, d.h. eine hohe Funktionalität, ein störungsfreier Betrieb sowie ein geringer Bedienungs- und Wartungsaufwand gewährleistet wird.

Diese Aufgabe wird durch die im Patentanspruch 1 angegebenen Merkmale gelöst.

Der erfindungsgemäße Festbettreaktor umfasst zumindest in einem Teilbereich seiner Gesamtlänge ein vertikal angeordnetes Rohrbündelfestbett, das die gesamte Reaktorfläche im Querschnitt belegt, wobei das Rohrbündelfestbett aus einer Vielzahl ausschließlich nebeneinander angeordneter Einzelröhren besteht.

Die Einzelröhren bilden dabei über ihre Gesamtlänge durchgehende Strömungskanäle, die nicht durch quer zur Strömungsrichtung ragende Flächen eingeschränkt werden. Die Strömungskanäle der Einzelröhren weisen vorzugsweise alle einen gleichen Querschnitt auf, wobei der Durchmesser zwischen 20 und 200 mm Nenndurchmesser variieren kann. Die Länge der Einzelröhren kann 1000 bis 8000 mm betragen. Durch die Variation des Nenndurchmessers und der Länge der Module wird die Belegungsdichte des Reaktorquerschnitts und damit ebenfalls die zur Verfügung gestellte Aufwuchsfläche variiert. Aufgrund der vertikalen Orientierung der Aufwuchskörper wird der freie Strömungsquerschnitt des Reaktors nur unwesentlich eingeschränkt, so dass eine Verstopfungsgefahr der als Aufwuchskörper dienenden Einzelröhren minimiert und eine Reinigung innerhalb des Reaktors erleichtert wird.

In einer Weiterbildung des Erfindungsgedankens ist im Festbettreaktor eine Unterstützungskonstruktion vorgesehen, auf der die Installation des Rohrbündel-Festbettes erfolgt. Die Unterstützungskonstruktion umfasst dabei ein horizontal angeordnetes Gitternetz aus zum Beispiel Edelstahlprofilen, die in einem Abstand von 0,1 x H bis 0,6 x H vom Behälterboden angeordnet ist. Hierdurch wird ein Abrutschen der Einzelröhren in den darunter liegenden Reaktorbereich verhindert.

Als Installationshilfe können in einer bevorzugten Ausgestaltung des Erfindungsgedankens im Behälterraum zusätzlich Querverstrebungen oder -verspannungen zum Beispiel aus Edelstahlprofilen oder aus Edelstahlseilen eingebracht sein, die die Reaktorgrundfläche in kleinere Segmente aufteilen. Diese Montagehilfe befindet sich auf 50 bis 80 % der Festbetthöhe und erlaubt ein segmentweises Einbringen des Rohrbündelfestbettes in den Festbettreaktor.

Die einzelnen Röhren können dabei aus organischen oder anorganischen Materialien bestehen. Bevorzugt werden röhrenförmige Kunststoffkörper aus Polyvinylchlorid, Polypropylen oder Polyethylen eingesetzt, die durch Variationen der Oberflächenbeschaffenheit ein Anhaften der Biomasse erleichtern sollen. Da es im Rohrbündelfestbett keine Flächen in den Strömungskanälen gibt, die quer zur Strömungsrichtung stehen, entfällt die rein physikalische Akkumulation der Biomasse in Aufwuchskörper-Zwischenräumen. Um trotzdem die für den biologischen Abbauprozess notwendige Biomassenkonzentration bereitstellen zu können, wird die Beschaffenheit der Festbettoberfläche entsprechend angepasst. Hierzu ist eine Behandlung der inneren und/oder äußeren Oberfläche der Einzelröhren durch Aufrauen oder Beschichten vorgesehen. Die Beschichtung kann beigemischte Mineralien und Zuschlagstoffe enthalten, die das Biomassewachstum beschleunigen. Es können beispielsweise Mineralien und Zuschlagstoffe wie zum Beispiel Aktivkohle, pulverisierter Grafit, Kalk, Bims und/oder Phosphat und Ammoniumsalze der wasserbasierten Beschichtungslösung vor dem Auftragen beigemischt werden. Das Auftragen kann je nach Anforderung durch Tauchbehandlung, Sprüh- oder Streichauftrag erfolgen. Der Anteil des Rohrbündelfestbettes der beschichtet oder behandelt wird, kann in Abhängigkeit des Anwendungsfalles ebenfalls variiert werden.

Vorzugsweise wird nur im Einströmbereich der Einzelröhren eine entsprechende Oberflächenbehandlung vorgesehen.

Beim Durchströmen des Rohrbündelfestbettes mit dem aufzubereitenden Abwasser kommt es nach der initialen Besiedlung des Festbettes zum Biomassewachstum auf dem Aufwuchskörpern in Form eines Biofilms. Mit zunehmender Biofilmdicke kommt es zu periodischer Ablösung von Biomasse aufgrund der Strömungsverhältnisse in dem Aufwuchskörpern (engl.: sloughing). In Weiterbildung des Erfindungsgedankens ist eine Spülvorrichtung vorgesehen, mittels der die periodische Ablösung gezielt beeinflusst werden kann. Somit kann einer Totraumbildung im Reaktor entgegengewirkt werden.

Die Spülvorrichtung wird dabei derart angesteuert und ausgeführt, dass in die Zulaufleitung am Behälterboden ein zusätzlicher Anschlussstutzen für ein gasförmiges Spülmedium mit entsprechenden Sicherheitsventilen integriert wird. An diesen Anschlussstutzen werden bevorzugt Gasdruckbehälter angeschlossen, die mit Inertgas, zum Beispiel Stickstoff befüllt sind. Durch Öffnen des Druckventils wird das Inertgas entspannt und strömt in das Verteilsystem des Reaktors, so dass eine periodische Erhöhung der Turbulenzen im Rohrbündelfestbett erzielt und die Ablösung nicht fest anhaftender Biomasse begünstigt wird.

Die Erfindung wird nachfolgend an einem Ausführungsbeispiel, das in den Zeichnungen dargestellt ist, näher erläutert. Es zeigt:
- Fig. 1 :: einen Längsschnitt durch den Festbettreaktor mit installiertem Rohrbündelfestbett;
- Fig. 2 :: einen Querschnitt durch den Festbettreaktor mit Teilausschnitt durch das Rohrbündelfestbett;

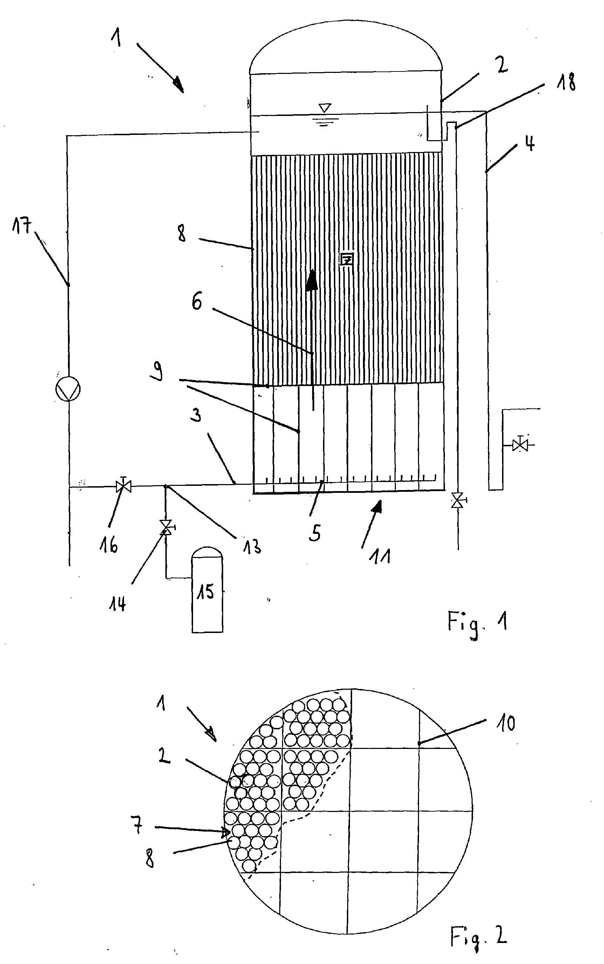

Der in Fig. 1 schematisch dargestellte Festbettreaktor 1 zur anaeroben Abwasserbehandlung wird in der kommunalen als auch industriellen Abwasser- und Abfallbehandlung eingesetzt. Der Festbettreaktor 1 besteht dabei im wesentlichen aus einem geschlossenen zylindrischen Behälterraum 2 mit einem Zulauf für das zu behandelnde Abwasser im Bodenbereich des Behälterraums 2 und mindestens einer Ablaufleitung 4 im oberen Endbereich des Behälterraumes. Wie es aus der schematischen Darstellung zu ersehen ist, besteht der Zulauf aus einer Zulaufleitung 3, die in ein am Behälterboden angeordnetes Verteilsystem 5 mündet. Das Verteilsystem besteht vorzugsweise aus einem ringförmig oder sternförmig angeordneten Leitungssystem mit regelmäßig beabstandet angeordneten Verteilöffnungen. Das Verteilsystem 5 kann auch aus einem mittig angeordneten Zentralrohr und gleichmäßig beabstandet daran angeordneten Querverteilrohren bestehen. Der Festbettreaktor 1 wird in vertikaler Richtung von unten nach oben von dem zu behandelnden Abwasser durchströmt (Pfeil 6). Im zylindrischen Behälterraum 2 ist in vertikaler Ausrichtung ein Rohrbündelfestbett 7 installiert. Dieses Rohrbündelfestbett 7 belegt dabei die gesamte Fläche des Behälterraumes 2 im Querschnitt. Das Rohrbündelfestbett 7 selbst besteht aus einer Vielzahl ausschließlich nebeneinander angeordneter Einzelröhren 8. Dies lässt sich aus dem Teilausschnitt durch den Querschnitt des Festbettreaktors 7 in Fig. 2 deutlich ersehen. Der Durchmesser der Einzelröhren 8 kann zwischen 20 und 200 mm variierten, die Länge der Einzelröhren kann 1000 bis 8000 mm betragen. Wesentlich ist, dass der Durchmesser der eingesetzten Einzelröhren 8 gleich groß ist. Das Rohrbündelfestbett 7 selbst nimmt vorzugsweise 30 bis 80 % der gesamten Reaktorhöhe ein, wobei die Installation des Rohrbündelfestbettes 7 auf einer Unterstützungskonstruktion 9 erfolgt. Die Unterstützungskonstruktion 9 besteht dabei aus einem horizontal angeordneten Gitternetz aus beispielsweise Edelstahlprofilen, so dass ein Abrutschen der Einzelröhren 8 in den darunter liegenden Reaktorbereich verhindert wird. Aufgrund der Anordnung der Unterstützungskonstruktion 9 ist einen Installation des Rohrbündelfestbettes 7 in einem Abstand 0,1 x Höhe des Behälterraumes 2 bis 0,6 x Höhe des Behälterraumes 2 vom Reaktorboden möglich. Aufgrund des so gewählten Abstandes des Rohrbündelfestbettes 7 zum Behälterboden ist eine gleichmäßige Beaufschlagung des Rohrbündelfestbettes 7 beim Durchströmen mit dem zu behandelnden Abwasser möglich.

Als Installationshilfen sind weiterhin im Behälterinnenraum zusätzliche Querverstrebungen oder -verspannungen 10 z.B. aus Edelstahlprofilen oder Edelstahlseilen angeordnet, die die Grundfläche des Behälterraums 2 in kleinere Segmente aufteilen. Diese Aufteilung ist in der Fig. 2 zu ersehen. Die Querverstrebungen oder -verspannungen 10 befinden sich in 50 bis 80% der Höhe des Rohrbündelfestbettes 7, so dass ein segmentweises Einbringen des Rohrbündelfestbettes 7 in den Behälterraum 2 möglich ist.

Das Material der Einzelröhren 8 kann entweder aus organischen oder anorganischen Materialien sein. Bevorzugt werden röhrenförmige Kunststoffkörper aus Polyvinylchlorid, Polypropylen oder Polyethylen eingesetzt, die durch Variation der Oberflächenbeschaffenheit ein Anhaften der Biomasse erleichtern sollen. Da es im Rohrbündelfestbett 7 keine Flächen in den Strömungskanälen gibt, die quer zur Strömungsrichtung stehen, entfällt die rein physikalische Akkumulation der Biomasse in Aufwuchskörper-Zwischenräumen. Um trotzdem die für den biologischen Abbauprozess notwendige Biomassekonzentration bereitstellen zu können, muss die Beschaffenheit der Festbettoberfläche entsprechend angepasst werden. Dazu kann die innere und/oder äußere Oberfläche der Einzelröhren 8 durch Aufrauhen oder Beschichten behandelt werden. Die Beschichtung kann darüber hinaus beigemischte Mineralien und Zuschlagsstoffe enthalten, die das Biomassewachstum beschleunigen. Falls benötigt, werden die Mineralien und Zuschlagsstoffe wie z.B. Aktivkohle, pulverisierter Graphit, Kalk, Bims und/oder Phosphat- und Ammoniumsalze der wasserbasierten Beschichtungslösung vor dem Auftragen beigemischt. Das Auftragen, kann je nach Anforderung durch Tauchbehandlung, Sprüh- oder Streichauftrag erfolgen. Der Anteil des Rohrbündelfestbettes 7, der beschichtet oder behandelt wird kann in Abhängigkeit des Anwendungsfalles ebenfalls variiert werden.

Nach der initialen Besiedelung des Festbettes kommt es zum Biomassewachstum auf den Aufwuchskörpern (Einzelröhren 8) in Form eines Biofilms. Mit zunehmender Biofilmdicke kommt es zu periodischer Ablösung von Biomasse aufgrund der Strömungsverhältnisse in den Aufwuchskörpern (engl. "sloughing"). Um diese periodische Ablösung gezielt beeinflussen zu können und damit einer Totraumbildung im Reaktor entgegenzuwirken, wird im Reaktorkonzept ein technisches Spülsystem 11 integriert. Die Aufgabe dieses Spülsystems 11 ist es durch periodische Erhöhung der Turbulenz im Rohrbündelfestbett 7, die Ablösung nicht fest anhaftender Biomasse zu begünstigen und über einen separaten Spülanschluss 12 aus dem Behälterraum 2 auszutragen. Hierzu ist in die Zulaufleitungen 3 ein zusätzlicher Anschlussstutzen 13 für ein gasförmiges Spülmedium mit entsprechenden Sicherheitsventilen 14 integriert. An diesen Anschlussstutzen 13 ist ein Gasdruckbehälter 15 angeschlossen, der mit Inertgas, z.B. Stickstoff, befüllt ist. Durch Öffnen des Druckventils wird das Inertgas entspannt und strömt in das Verteilsystem 5 des Festbettreaktors 1. Die Abstände der einzelnen Verteilöffnungen zueinander sind dergestalt gewählt, dass der horizontale Abstand zur nächsten Verteilöffnung kleiner ist als der vertikale Abstand von der Verteilöffnung zur Unterseite des Rohrbündelfestbetts 7. Durch das Absperrorgan 16 wird verhindert, dass Inertgas in die Umwälzleitung 17 entweicht. Die Umwälzpumpe wird während des Spülvorganges außer Betrieb gesetzt. Das Inertgas durchströmt das Rohrbündelfestbett 7 nach Verlassen des Verteilsystems 5 von unten nach oben und entfernt durch die dadurch entstehende Turbulenz an den Einzelröhren 8 anhaftende Überschuss-Biomasse. Durch den Spülvorgang und die damit verbundene Ausdehnung des Reaktorinhalts wird der Füllstand im Behälterraum 2 des Festbettreaktors 1 kurzfristig angehoben. Durch Öffnen eines Absperrorgans am oberhalb des Rohrbündelfestbetts 7 angeordneten Spülwasser-Anschlussstutzen wird das Schlamm-Wasser-Gemisch aus dem Reaktor über eine Spülwasserablaufleitung 18 entfernt. Der Spülwasseranschluss dient auch zur Druckentlastung des Festbeaktors 1, da ansonsten durch das Einströmen des Inertgases der zulässige Reaktorüberdruck überschritten würde. Der Spülwasseranschluss wird getaucht so ausgeführt, dass während des Spülvorgangs keine Umgebungsluft in den Festbettreaktor 1 eindringen kann. Nach Abstellen der Inertgaszufuhr wird zunächst der Spülwasseranschluss gesperrt und die Verteilleitung wieder für den Zulauf des zu behandelnden Abwassers freigegeben.

In einer weiteren Ausgestaltung des Spülsystems 11 kann der Spülwasseraustrag auch über die normale Reaktorablaufleitung 4 erfolgen, an dem zusätzlich ein Spülwasserablauf-Sperrorgan angebracht wird. Bei Öffnen des Druckventils 6 wird dieses Absperrorgan ebenfalls geöffnet und das Spülwasser über den Zusatzstutzen ausgetragen.

Nachfolgend ist in tabellarischer Form ein Ausführungsbeispiel eines erfindungsgemäßen Festbettreaktors aufgezeigt:

### Ausführungsbeispiel Festbettreaktor

| | | |
|---|---|---|
| Größe des Behälterraums: | | |
| | Festbettreaktordurchmesser | d_{Rk} = 4350 mm |
| | Festbettreaktorhöhe | H_{Rk} = 12000 mm |
| | Abzugsstutzen | H = 11000 mm |
| | Rezirkulationsstutzen | H = 9500 mm |
| | Querschnittsfläche | A = 14,86 m² |
| Rohrbündelfestbett: | | |
| | Länge der Einzelröhren | L_{R} = 5000 mm |
| | Außendurchmesser der Einzelröhren | dₐ = 90 mm |
| | Innendurchmesser der Einzelröhren | dᵢ = 83 mm |
| | Wandstärke der Einzelröhren | d_{w} = 3,5 mm |
| | Beschichtung | L = 300 - 500 mm |
| | (Beschichtung an Ein- und Ausströmbereich des Rohrbündelfestbettes aufgebracht) | |
| Montagehilfe: | | |
| | Anbringhöhe | H = 6000 mm |
| | (3× Querverspannung, 3× Längsverspannung, Seilabstand 1100 mm) | |
| Unterstützungskonstruktion: | | |
| | Höhe | H = 4000 mm |
| | (Vierkantrohre 100 × 100 × 4 mm, 50 × 50 × 3 mm) | |
| Verteilsystem: | | |
| | Rohrdurchmesser | DN 80 |
| | Abstand von Behälterboden | H = 200 mm |
| | Abstand Querverteiler | L = 875 mm |
| | (von einem mittig angeordneten Zentralrohr gehen die Querverteilungen zu den Wänden des Behälterraums ab) | |
| Rezirkulation: | | Qₘₐₓ = 12 m³/h |
| Zulauf (zu behandelndes Abwasser): | | Qₘₐₓ = 13 m³/h |

Sollte die Temperatur des zu behandelnden Abwassers unter 30°C liegen, dann muss vor der Zuführung zum Festbettreaktor 1 eine Erwärmung des zu behandelnden Abwassers auf > 30°C erfolgen.

## Patentansprüche

1. Festbettreaktor zur anaeroben Behandlung von Abwasser, der einen geschlossenen Behälterraum(2) mit einem Zulauf im Bereich des Behälterbodens und einen Ablauf im Bereich des Behälterkopfes sowie im Behälterraum (2) angeordnete Festbetteinbauten umfasst, wobei die Festbetteinbauten in vertikaler Richtung von dem zu behandelnden Abwasser durchströmt werden, **dadurch gekennzeichnet, dass** die Festbetteinbauten (7) zumindest in einem Teilbereich der Gesamtlänge des Behälterraumes (2) angeordnet sind und ein vertikal ausgerichtetes Rohrbündelfestbett (7) umfassen, wobei das Rohrbündelfestbett (7) die gesamte Reaktorfläche im Querschnitt belegt und wobei das Rohrbündelfestbett (7) aus einer Vielzahl ausschließlich nebeneinander angeordneter Einzelröhren (8) besteht.

2. Festbettreaktor nach Patentanspruch 1, wobei die Einzelröhren (8) des Rohrbündelfestbettes (7) alle den gleichen Durchmesser aufweisen.

3. Festbettreaktor nach Patentanspruch 1 oder 2 wobei die Einzelröhren (8) des Rohrbündelfestbettes (7) einen Nenndurchmesser zwischen 20 und 200 mm sowie eine Länge von 1000 bis 800 mm aufweisen.

4. Festbettreaktor nach einem der vorhergehenden Ansprüche, wobei das Rohrbündelfestbett (7) 30 bis 80 % der Höhe des Behälterraumes (2) ausfüllen.

5. Festbettreaktor nach einem der vorhergehenden Ansprüche, wobei die Einzelröhren (8) aus Kunststoff bestehen und eine Wandstärke zwischen 1 und 20 mm besitzen.

6. Festbettreaktor nach einem der vorhergehenden Ansprüche, wobei die Einzelröhren (8) des Rohrbündelfestbettes (7) mit einer kunststoffgebundenen Mineralschicht beschichtet sind, wodurch die Anhaftung der Biomasse verbessert wird.

7. Festbettreaktor nach einem der vorhergehenden Ansprüche, wobei zur Beschleunigung des Biomassewachstums eine Beschichtung der Einzelröhren (8)erfolgt, die mit Nährstoffen versetzt ist.

8. Festbettreaktor nach einem der vorhergehenden Ansprüche, wobei die Beschichtung der Einzelröhren (8) im Bereich der Einlauffläche das Rohrbündelfestbett (7) erfolgt.

9. Festbettreaktor nach einem der vorhergehenden Ansprüche, wobei im Behälterraum (2) eine Unterstützungskonstruktion (9) vorgesehen ist, auf der die Installation des Rohrbündelfestbettes (7) erfolgt.

10. Festbettreaktor nach einem der vorhergehenden Ansprüche, wobei die Unterstützungskonstruktion (9) ein horizontal angeordnetes Gitternetz aus einem Edelstahlprofil umfasst.

11. Festbettreaktor nach einem der vorhergehenden Ansprüche, wobei im Behälterraum (2) zusätzlich Querverstrebungen oder -verspannungen (10) als Montagehilfe eingebracht sind.

12. Festbettreaktor nach einem der vorhergehenden Ansprüche, wobei im Bereich des Behälterbodens ein Spülsystem (11) angeordnet ist.

13. Festbettreaktor nach einem der vorhergehenden Ansprüche, wobei das Verteilsystem des Spülsystems (11) derart ausgestaltet ist, dass der Abstand benachbarter Verteilöffnungen kleiner ist, als der vertikale Abstand zur Unterseite des Rohrbündelfestbettes (7).
